# EUROPEAN PATENT APPLICATION

(11) **EP 4 745 371 A1**
(43) Date of publication of application: **20.05.2026**
(21) Application number: 25216068.4
(22) Date of filing: 14.11.2025
(51) Int. Cl.: F01D 25/30, F02K 3/115, H02S 10/30

(54) **THERMOPHOTOVOLTAIC ASSEMBLY FOR AN AIRCRAFT PROPULSION SYSTEM**

(30) Priority: 15.11.2024 US 202418949528
(71) Applicant: RTX Corporation, Farmington, CT 06032 (US)
(72) Inventor: GULER, Urcan, Avon, 06001 (US); SPRINGER, Chad A., Cherry Valley, 61016 (US); PAL, Debabrata, Hoffman Estates, 60192 (US)
(74) Representative: Dehns

(57) **Abstract**

A gas turbine engine (22) for an aircraft propulsion system includes a turbine section (32), an exhaust section (34), an engine case (60), and a thermophotovoltaic (TPV) assembly (70). The turbine section (32) and the exhaust section (34) form a core flow path (66) along an axis (44) of the gas turbine engine (22). The engine case (60) is disposed within the exhaust section (34). The engine case (60) includes an inner liner (72) and an outer liner (74). Each of the inner liner (72) and the outer liner (74) extend circumferentially about the axis (44). The inner liner (72) forms the core flow path (66) through the exhaust section (34). The outer liner (74) is disposed radially outward of the inner liner (72) and forms an annular cavity (84) between the inner liner (72) and the outer liner (74). The TPV assembly (70) includes a plurality of TPV cells (86). The plurality of TPV cells (86) are disposed within the annular cavity (84).

## Description

### BACKGROUND

### 1. Technical Field

This disclosure relates generally to aircraft propulsion systems and, more particularly, to thermophotovoltaic assemblies for recovering energy from aircraft propulsion system waste heat.

### 2. Background Information

Aircraft propulsion systems, such as those including gas turbine engines, may typically exhaust high-temperature gases resulting from a combustion process. Various systems and methods for extracting energy from these high-temperature exhaust gases are known. While these known systems and methods may be suitable for their intended purposes, there is always room in the art for improvement.

### SUMMARY

According to an aspect of the present disclosure, a gas turbine engine for an aircraft propulsion system includes a turbine section, an exhaust section, an engine case, and a thermophotovoltaic (TPV) assembly. The turbine section and the exhaust section form a core flow path along an axis of the gas turbine engine. The engine case is disposed within the exhaust section. The engine case includes an inner liner and an outer liner. Each of the inner liner and the outer liner extend circumferentially about the axis. The inner liner forms the core flow path through the exhaust section. The outer liner is disposed radially outward of the inner liner and forming an annular cavity between the inner liner and the outer liner. The TPV assembly includes a plurality of TPV cells. The plurality of TPV cells are disposed within the annular cavity.

In any of the aspects or examples described above and herein, the outer liner may extend between and to an inner radial side and an outer radial side, the plurality of TPV cells may be disposed on the inner radial side, and the TPV assembly may further include a heat exchanger disposed at the outer radial side opposite the plurality of TPV cells.

In any of the aspects or examples described above and herein, the heat exchanger may include an exterior panel and a plurality of heat transfer fins, the exterior panel may extend circumferentially about the axis, the plurality of heat transfer fins may extend radially between and connect the outer radial side and the exterior panel, and the plurality of heat transfer fins may form a plurality of cooling air channels through the heat exchanger.

In any of the aspects or examples described above and herein, a subset of the TPV cells may be disposed within the turbine section.

In any of the aspects or examples described above and herein, each of the plurality of TPV cells may include a photovoltaic (PV) unit and a spectral filter, and the spectral filter may be disposed between the PV unit and the inner liner.

In any of the aspects or examples described above and herein, the inner liner may include an emitter coating facing the plurality of TPV cells.

In any of the aspects or examples described above and herein, the gas turbine engine may include an electrical system electrically connected to the plurality of TPV cells.

In any of the aspects or examples described above and herein, the exhaust section may further form a portion of a bypass flow path, the engine case may be disposed radially between and separates the core flow path and the bypass flow path, and the outer liner may form the bypass flow path through the exhaust section.

In any of the aspects or examples described above and herein, the engine case may include an insulation material disposed between the inner liner and the outer liner.

In any of the aspects or examples described above and herein, the plurality of TPV cells may be further disposed on the inner liner.

According to another aspect of the present disclosure, a gas turbine engine for an aircraft propulsion system includes a turbine section, an exhaust section, an engine case, and a thermophotovoltaic (TPV) assembly. The turbine section and the exhaust section form a core flow path and a bypass flow path along an axis of the gas turbine engine. The engine case is disposed within the exhaust section. The engine case is disposed radially between and separating the core flow path and the bypass flow path. The engine case includes an inner liner and an outer liner. The inner liner forms the core flow path through the exhaust section. The outer liner is disposed radially outward of the inner liner. The TPV assembly includes a plurality of TPV cells. The plurality of TPV cells are disposed on one or both of the inner liner or the outer liner.

In any of the aspects or examples described above and herein, the outer liner may extend between and to an inner radial side and an outer radial side, the plurality of TPV cells may be disposed on the inner radial side, and the TPV assembly may further include a heat exchanger disposed at the outer radial side opposite the plurality of TPV cells.

In any of the aspects or examples described above and herein, the heat exchanger may include an exterior panel and a plurality of heat transfer fins, the exterior panel may extend circumferentially about the axis, the plurality of heat transfer fins may extend radially between and connect the outer radial side and the exterior panel, and the plurality of heat transfer fins may form a plurality of cooling air channels through the heat exchanger.

In any of the aspects or examples described above and herein, the plurality of cooling air channels may be configured to receive bypass air flowing along the bypass flow path through the exhaust section.

In any of the aspects or examples described above and herein, each of the plurality of TPV cells may include a photovoltaic (PV) unit and a spectral filter, and the spectral filter may be disposed between the PV unit and the inner liner.

According to another aspect of the present disclosure, a method for generating electrical power with a thermophotovoltaic (TPV) assembly of a gas turbine engine of an aircraft propulsion system includes directing a combustion exhaust gas through an exhaust section of the gas turbine engine along a core flow path, the core flow path extending along an axis of the gas turbine engine, heating an inner liner of an engine case with the combustion exhaust gas directed through the exhaust section, the inner liner forming the core flow path through the exhaust section, and generating electrical power with a plurality of TPV cells of the TPV assembly by absorbing an emitted light from the inner liner with the plurality of TPV cells, the plurality of TPV cells disposed radially outside of the inner liner.

In any of the aspects or examples described above and herein, the method may further include directing a bypass air flow along a bypass flow path separated from the core flow path by the engine case and cooling the TPV assembly by directing the bypass air flow through a heat exchanger of the TPV assembly.

In any of the aspects or examples described above and herein, the engine case may further include an outer liner disposed radially outward of the inner liner, the plurality of TPV cells may be disposed between the inner liner and the outer liner, and the outer liner may form the bypass flow path.

In any of the aspects or examples described above and herein, each of the plurality of TPV cells may include a photovoltaic (PV) unit and a spectral filter, and the method may further include filtering the emitted light with the spectral filter of each of the plurality of TPV cells and passing a filtered light from the spectral filter to a photovoltaic (PV) unit of each respective one of the plurality of TPV cells.

In any of the aspects or examples described above and herein, the inner liner may include an emitter coating facing the plurality of TPV cells.

The foregoing features and elements may be combined in various combinations without exclusivity, unless expressly indicated otherwise. For example, aspects and/or examples of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 illustrates propulsion systems for an aircraft, in accordance with one or more embodiments of the present disclosure.
FIG. 2 schematically illustrates cutaway, side view of an aircraft propulsion system including a gas turbine engine, in accordance with one or more embodiments of the present disclosure.
FIG. 3 schematically illustrates a cutaway, side view of an exhaust section of the gas turbine engine including a thermophotovoltaic (TPV) assembly, in accordance with one or more embodiments of the present disclosure.
FIG. 4 illustrates a cross-sectional view of the exhaust section of FIG. 3 taken along Line 4-4 of FIG. 3, in accordance with one or more embodiments of the present disclosure.
FIG. 5 schematically illustrates the TPV assembly with an exploded view of a TPV cell, in accordance with one or more embodiments of the present disclosure.
FIG. 6 schematically illustrates a cutaway, side view of an exhaust section of the gas turbine engine including another thermophotovoltaic (TPV) assembly, in accordance with one or more embodiments of the present disclosure.

### DETAILED DESCRIPTION

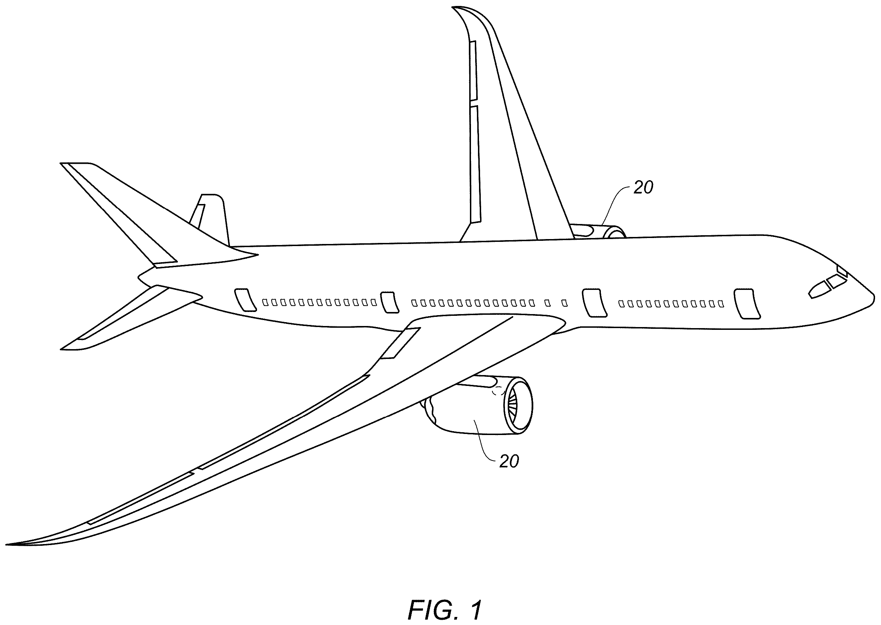

FIG. 1 illustrates a propulsion system 20 for an aircraft. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

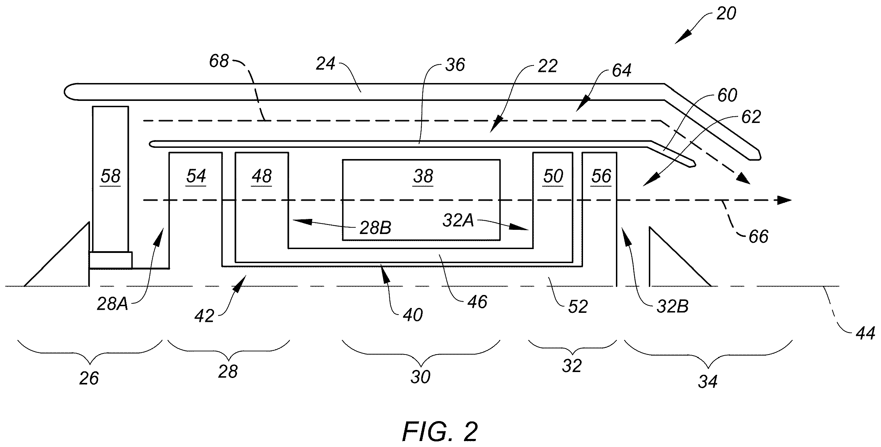

FIG. 2 schematically illustrates a cutaway, side view of the propulsion system 20. The propulsion system 20 includes a gas turbine engine 22 and a nacelle 24. The gas turbine engine 22 of FIG. 2 is configured as a multi-spool turbofan gas turbine engine. However, while the following description and accompanying drawings may refer to the turbofan gas turbine engine of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine.

The gas turbine engine 22 of FIG. 2 includes a fan section 26, a compressor section 28, a combustor section 30, a turbine section 32, and exhaust section 34, and an engine static structure 36. The compressor section 28 includes a low-pressure compressor (LPC) 28A and a high-pressure compressor (HPC) 28B. The combustor section 30 includes a combustor 38 (e.g., an annular combustor). The turbine section 32 includes a high-pressure turbine (HPT) 32A and a low-pressure turbine (LPT) 32B.

Components of the fan section 26, the compressor section 28, and the turbine section 32 form a first rotational assembly 40 (e.g., a high-pressure spool) and a second rotational assembly 42 (e.g., a low-pressure spool) of the gas turbine engine 22. The first rotational assembly 40 and the second rotational assembly 42 are mounted for rotation about a rotational axis 44 (e.g., an axial centerline) of the gas turbine engine 22 relative to the engine static structure 36.

The first rotational assembly 40 includes a first shaft 46, a bladed first compressor rotor 48 for the high-pressure compressor 28B, and a bladed first turbine rotor 50 for the high-pressure turbine 32A. The first shaft 46 interconnects the bladed first compressor rotor 48 and the bladed first turbine rotor 50.

The second rotational assembly 42 includes a second shaft 52, a bladed second compressor rotor 54 for the low-pressure compressor 28A, a bladed second turbine rotor 56 for the low-pressure turbine 32B, and a bladed fan rotor 58 for the fan section 26. The second shaft 52 of FIG. 2 interconnects the bladed second compressor rotor 54, the bladed second turbine rotor 56, and the bladed fan rotor 58. The bladed fan rotor 58 may alternatively be connected to the second shaft 52 by a gear train (e.g., a reduction gear assembly) configured to drive rotation of the bladed fan rotor 58 at a different rotational speed than the second shaft 52. The first shaft 46 and the second shaft 52 are concentric and configured to rotate about the rotational axis 44. The present disclosure, however, is not limited to concentric configurations of the first shaft 46 and the second shaft 52.

The engine static structure 36 may include one or more engine cases, cowlings, bearing assemblies, and/or other non-rotating structures configured to house and/or support (e.g., rotationally support) components of the gas turbine engine 22 sections 26, 28, 30, 32, 34. The engine static structure 36 includes an exhaust case 60 at the exhaust section 34. The exhaust case 60 extends circumferentially about (e.g., completely around) the rotational axis 44 axially downstream (e.g., aft) of the turbine section 32 (e.g., the low-pressure turbine 32B). The exhaust case 60 forms and circumscribes an exhaust duct 62 through the exhaust section 34.

The nacelle 24 forms an exterior, aerodynamic housing of the propulsion system 20 and its gas turbine engine 22. The nacelle 24 extends circumferentially about (e.g., completely around) the gas turbine engine 22 and the rotational axis 44. The nacelle 24 forms and circumscribes an annular bypass duct 64. The bypass duct 64 extends through the gas turbine engine 22 sections 26, 28, 30, 32, 34 radially between the nacelle 24 and the engine static structure 36 (e.g., one or more engine cases of the gas turbine engine 22).

In operation of the gas turbine engine 22 of FIG. 2, ambient air is directed through the fan section 26 and into a core flow path 66 (e.g., an annular flow path) and a bypass flow path 68 (e.g., an annular flow path) facilitated by rotation of the bladed fan rotor 58. Airflow along the core flow path 66 is compressed by the low-pressure compressor 28A and the high-pressure compressor 28B, mixed and burned with fuel in the combustor 38, and then directed through the high-pressure turbine 32A and the low-pressure turbine 32B. The bladed first turbine rotor 50 and the bladed second turbine rotor 56 rotationally drive the first rotational assembly 40 and the second rotational assembly 42, respectively, in response to the combustion gas flow through the high-pressure turbine 32A and the low-pressure turbine 32B. High-temperature exhaust gas is directed along the core flow path 66 through the exhaust section 34 (e.g., the exhaust duct 62) by the exhaust case 60, and exhausted from the propulsion system 20. Ambient air is directed along the bypass flow path 68 through the bypass duct 64. This bypass air is directed into and through the exhaust section 34 flowing along a radial exterior of the exhaust case 60.

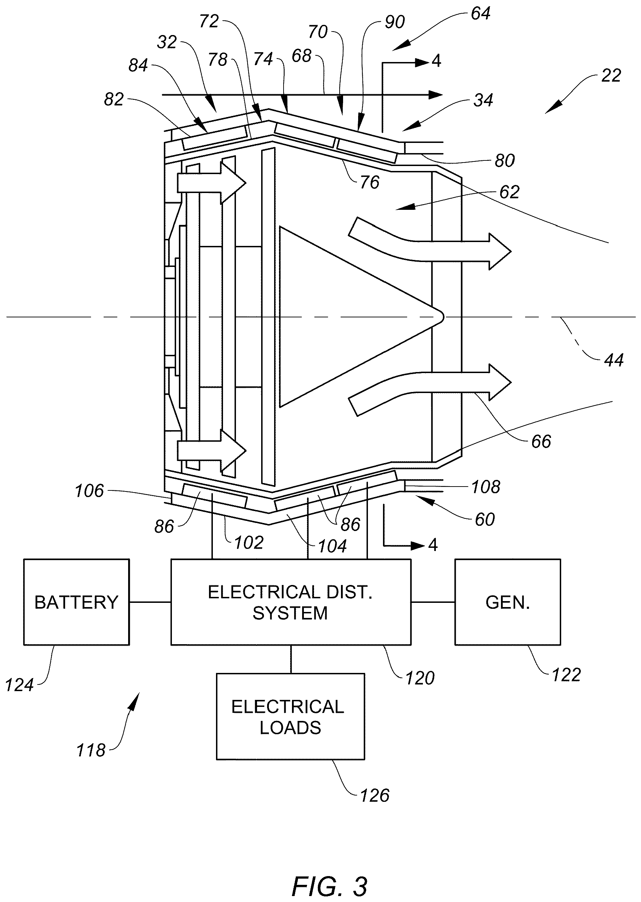

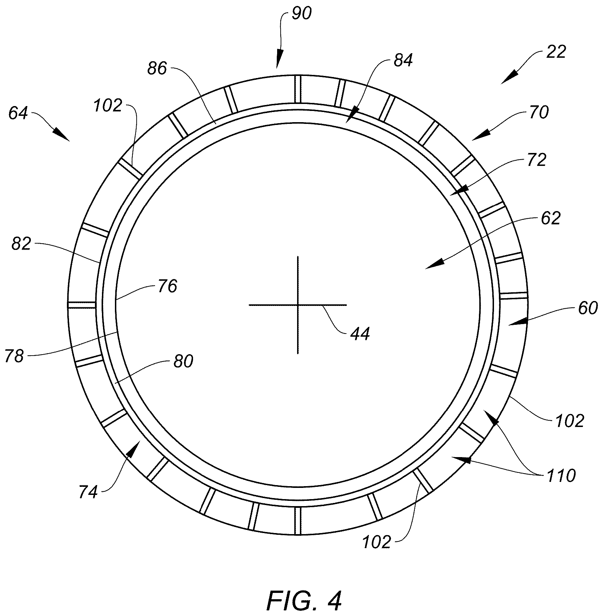

Referring to FIGS. 3 and 4, the gas turbine engine 22 further includes a thermophotovoltaic waste heat recovery assembly 70 ("TPV assembly" 70) within the exhaust section 34 and, in some embodiments, additionally within the turbine section 32. FIG. 3 illustrates a cutaway, side view of the TPV assembly 70 and portions of the turbine section 32 and the exhaust section 34. FIG. 4 illustrates a cross-sectional view of the TPV assembly 70 taken along Line 4-4 of FIG. 3.

The exhaust case 60 of FIGS. 3 and 4 includes an inner liner 72 and an outer liner 74. The inner liner 72 is a tubular body extending circumferentially about (e.g., completely around) the rotational axis 44. The inner liner 72 extends (e.g., radially extends) between and to an inner radial side 76 of the inner liner 72 and an outer radial side 78 of the inner liner 72. The inner radial side 76 forms and circumscribes the core flow path 66 through at least a portion of the exhaust section 34. The outer liner 74 is mounted to or otherwise disposed at (e.g., on, adjacent, or proximate) the inner liner 72. The outer liner 74 is a tubular body extending circumferentially about (e.g., completely around) the rotational axis 44 and the inner liner 72. The outer liner 74 extends (e.g., radially extends) between and to an inner radial side 80 of the outer liner 74 and an outer radial side 82 of the outer liner 74. The inner radial side 80 is radially spaced from the outer radial side 78. The inner liner 72 (e.g., the outer radial side 78) and the outer liner 74 (e.g., the inner radial side 80) form an annular cavity 84 radially therebetween. The outer radial side 82 forms an inner boundary of the bypass flow path 68 through at least a portion of the exhaust section 34. As shown in FIG. 3, for example, portions of the inner liner 72 and the outer liner 74 may additionally be disposed within the turbine section 32 (e.g., circumscribing the bladed second turbine rotor 56). The portions of the inner liner 72 and the outer liner 74 within the turbine section 32 may be formed by the exhaust case 60 or by another discrete engine case attached to the exhaust case 60.

The TPV assembly 70 includes a plurality of TPV cells 86, an emitter 88, and a heat exchanger 90. The TPV cells 86 are mounted to or otherwise disposed at (e.g., on, adjacent, or proximate) the inner radial side 80 and within the annular cavity 84. The TPV cells 86 are arranged on the outer liner 74 and circumferentially distributed about the rotational axis 44 and the inner liner 72. The TPV cells 86 may be arranged on the outer liner 74 along all or a substantial axial portion of the outer liner 74 within the exhaust section 34. As shown in FIG. 3, the TPV cells 86 (e.g., a subset of the TPV cells 86) may additionally be arranged within the turbine section 32. The TPV cells 86 are spaced from (e.g., radially spaced from) the outer radial side 78. The TPV cells 86 may be spaced (e.g., radially spaced) from the inner liner 72 (e.g., the outer radial side 80). Alternatively, the TPV cells 86 may be disposed on the inner liner 72 (e.g., the outer radial side 80).

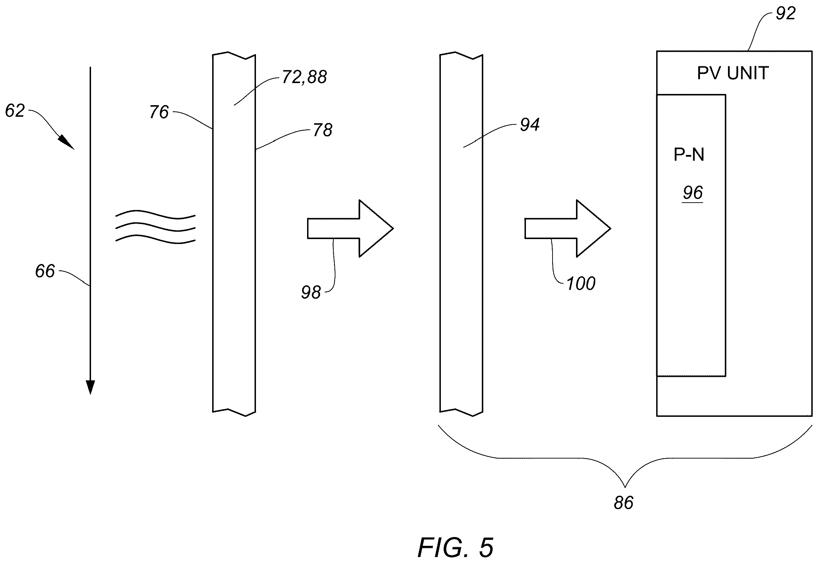

FIG. 5 schematically illustrates an exemplary one of the TPV cells 86. Each of the TPV cells 86 includes a photovoltaic (PV) unit 92 and a spectral filter 94. The PV unit 92 may have a typically photovoltaic configuration including a P-N junction 96 formed by a semiconductor material such as, but not limited to, gallium antimonide (GaSb), Germanium (Ge), or the like, and having a band gap primarily in the infrared or near infrared spectrum. The present disclosure, however, is not limited to the foregoing exemplary configuration of the PV unit 92. The spectral filter 94 is disposed between (e.g., radially between) the PV unit 92 and the emitter 88. The spectral filter 94 is configured to filter select wavelengths of an emitted light 98 (e.g., infrared light) from the emitter 88 which are not matched to the band gap of the PV unit 92, and which may not be effectively converted by the PV unit 92, and to allow a filtered light 100 to pass therethrough to the PV unit 92.

The emitter 88 is configured to absorb thermal energy from the high-temperature exhaust gas along the core flow path 66, and to emit the emitted light 98. The emitter 88 of the present disclosure is formed by the inner liner 72. The inner liner 72 may be formed wholly or in substantial part by a liner material forming the emitter 88. Alternatively, the emitter 88 may be formed by a coating or other material layer of the inner liner 72 forming the outer radial side 78. The emitter 88 material may be selected such that at a typical operating temperature of the exhaust section 34, the emitter 88 emits the emitted light 98 at wavelengths corresponding to the band gap of the PV unit 92. Examples of emitter 88 materials which can withstand the high operating temperatures of the exhaust section 34 along the core flow path 66 and which facilitate suitable emitted light 98 characteristics for the PV units 92 include tungsten (W) and other refractory metals, silicon carbide (SiC), and the like. The present disclosure, however, is not limited to any particular material or materials of the emitter 88 or the inner liner 72.

The heat exchanger 90 (see, e.g., FIGS. 3 and 4) is configured to facilitate cooling of the TPV cells 86. For example, the heat exchanger 90 of FIGS. 3 and 4 is configured to facilitate heat transfer from the TPV cells 86 and the outer liner 74 to the significantly cooler bypass air (relative to the exhaust gas along the core flow path 66) passing through the bypass duct 64 along the bypass flow path 68. The heat exchanger 90 is mounted on the outer liner 74 (e.g., the outer radial side 82) and disposed within the bypass duct 64. The heat exchanger 90 includes an exterior panel 102 and a plurality of heat transfer fins 104. The exterior panel 102 extends circumferentially about (e.g., completely around) the rotational axis 44 and the outer liner 74. The exterior panel 102 is spaced (e.g., radially spaced) from the outer liner 74. The heat transfer fins 104 extend between (e.g., radially between) and connect the outer liner 74 (e.g., the outer radial side 82) and the exterior panel 102. The heat transfer fins 104 may extend axially or substantially axially in their respective lengthwise directions between a leading fin end 106 and a trailing fin end 108. The heat transfer fins 104 are circumferentially distributed between the outer liner 74 and the exterior panel 102 to form a plurality of cooling air channels 110 through the heat exchanger 90. The TPV assembly 70 may include a single heat exchanger 90 configured to facilitate cooling of each of the TPV cells 86 of the TPV assembly 70. Alternatively, the TPV assembly 70 may include a plurality of heat exchangers 90 each configured to facilitate cooling of a subset of the TPV cells 86.

During operation of the gas turbine engine 22, the emitter 88 (e.g., the inner liner 72) is heated by the flow of the high-temperature exhaust gas through the exhaust section 34 along the core flow path 66, causing the emitter 88 to emit the emitted light 98, as discussed above. The spectral filter 94 filters the emitted light 98 and allows the filtered light 100 to pass to the PV unit 92. The interaction of the filtered light 100 with the PV unit 92 causes the PV unit 92 to generate a direct current (DC) electrical power output which may be supplied to an electrical system of the propulsion system 20 or the aircraft on which the propulsion system 20 is installed. For example, the TPV assembly 70 may supply electrical power to one or more electrical loads of the propulsion system 20 and/or the aircraft such as, but not limited to, electronic control systems, environmental control systems (ECS), lighting systems, hybrid-electric propulsion systems (e.g., an electric propulsion motor), or the like, and the present disclosure is not limited to any particular electrical system configuration for use with the TPV assembly 70 or electrical interconnection between the electrical system and the TPV assembly 70. As shown in FIG. 3, for example, the TPV cells 86 may be electrically connected with an electrical system 118 of the gas turbine engine 22. The electrical system 118 of FIG. 3 includes an electrical distribution system 120, a generator 122, and a battery 124. The electrical distribution system 120 (e.g., electrical cables, breakers, contactors, power conversion equipment, etc.) electrically interconnects the TPV cells 86, the generator 122, and the battery 124 with one or more electrical loads 126 of the propulsion system 20 (see FIGS. 1 and 2) or the aircraft on which the propulsion system 20 is installed. Bypass air flow is directed through the heat exchanger 90 (e.g., the cooling air channels 110) and along the heat transfer fins 104 to facilitate cooling of the TPV assembly 70 and its TPV cells 86.

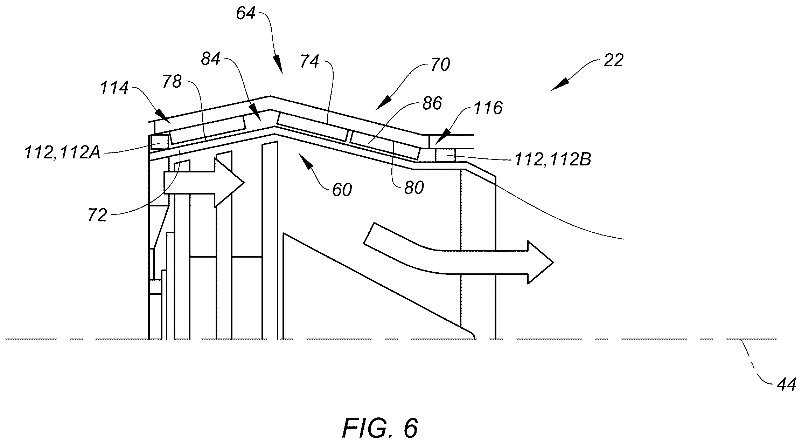

Referring to FIG. 6, in some embodiments, the TPV assembly 70 may additionally include one or more insulation members 112. The insulation members 112 may be installed within the annular cavity 84 between the inner liner 72 (e.g., the outer radial side 78) and the outer liner 74 (e.g., the inner radial side 80), for example, on configurations of the exhaust case 60 for which the annular cavity 84 may otherwise be connected in fluid communication with the bypass duct 64. The TPV assembly 70 of FIG. 6 includes a first insulating ring 112A and a second insulating ring 112B. The first insulating ring 112A is disposed within the annular cavity 84 at (e.g., on, adjacent, or proximate) an upstream end 114 of the TPV assembly 70. The second insulating ring 112B is disposed within the annular cavity 84 at (e.g., on, adjacent, or proximate) a downstream end 116 of the TPV assembly 70. Each of the first insulating ring 112A and the second insulating ring 112B extends circumferentially about (e.g., completely around) the rotational axis 44 within the annular cavity 84. The insulating members 112, 112A, 112B facilitate improvement thermal isolation of the TPV cells 86, electrical connectors, and electrical terminals of the TPV assembly 70.

In some embodiments, the TPV assembly 70 may additionally or alternatively be installed on a section of the exhaust section 34 associated with a power augmentation system. In such embodiments, the TPV assembly 70 may be configured to generate electrical power when such an augmentation system is in use.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A gas turbine engine (22) for an aircraft propulsion system (20), the gas turbine engine (22) comprising:
a turbine section (32) and an exhaust section (34), the turbine section (32) and the exhaust section (34) forming a core flow path (66) along an axis (44) of the gas turbine engine (22);
an engine case (60) disposed within the exhaust section (34), the engine case (60) including an inner liner (72) and an outer liner (74), each of the inner liner (72) and the outer liner (74) extending circumferentially about the axis (44), the inner liner (72) forming the core flow path (66) through the exhaust section (34), the outer liner (74) disposed radially outward of the inner liner (72) and forming an annular cavity (84) between the inner liner (72) and the outer liner (74); and
a thermophotovoltaic (TPV) assembly (70) including a plurality of TPV cells (86), the plurality of TPV cells (86) disposed within the annular cavity (84).

2. The gas turbine engine of claim 1, wherein the outer liner (74) extends between and to an inner radial side (80) and an outer radial side (82), the plurality of TPV cells (86) are disposed on the inner radial side (80), and the TPV assembly (70) further includes a heat exchanger (90) disposed at the outer radial side (82) opposite the plurality of TPV cells (86).

3. The gas turbine engine of claim 2, wherein the heat exchanger (90) includes an exterior panel (102) and a plurality of heat transfer fins (104), the exterior panel (102) extending circumferentially about the axis (44), the plurality of heat transfer fins (104) extending radially between and connecting the outer radial side (82) and the exterior panel (102), and the plurality of heat transfer fins (104) form a plurality of cooling air channels (110) through the heat exchanger (90).

4. The gas turbine engine of any preceding claim, wherein a subset of the TPV cells (86) are disposed within the turbine section (32).

5. The gas turbine engine of any preceding claim, wherein each of the plurality of TPV cells (86) includes a photovoltaic (PV) unit (92) and a spectral filter (94), and the spectral filter (94) is disposed between the PV unit (92) and the inner liner (72).

6. The gas turbine engine of any preceding claim, wherein the inner liner (72) includes an emitter coating (88) facing the plurality of TPV cells (86).

7. The gas turbine engine of any preceding claim, wherein the gas turbine engine (22) includes an electrical system (118) electrically connected to the plurality of TPV cells (86).

8. The gas turbine engine of any preceding claim, wherein the exhaust section (34) further forms a portion of a bypass flow path (68), the engine case (60) is disposed radially between and separates the core flow path (66) and the bypass flow path (68), and the outer liner (74) forms the bypass flow path (68) through the exhaust section (34).

9. The gas turbine engine of any preceding claim, wherein:
the engine case (60) includes an insulation material (112) disposed between the inner liner (72) and the outer liner (74); and/or
the plurality of TPV cells (86) are further disposed on the inner liner (72).

10. A gas turbine engine (22) for an aircraft propulsion system (20), the gas turbine engine (22) comprising:
a turbine section (32) and an exhaust section (34), the turbine section (32) and the exhaust section (34) forming a core flow path (66) and a bypass flow path (68) along an axis (44) of the gas turbine engine (22);
an engine case (60) disposed within the exhaust section (34), the engine case (60) disposed radially between and separating the core flow path (66) and the bypass flow path (68), the engine case (60) including an inner liner (72) and an outer liner (74), the inner liner (72) forming the core flow path (66) through the exhaust section (34), the outer liner (74) disposed radially outward of the inner liner (72); and
a thermophotovoltaic (TPV) assembly (70) including a plurality of TPV cells (86), the plurality of TPV cells (86) disposed on one or both of the inner liner (72) or the outer liner (74).

11. The gas turbine engine of claim 10, wherein the outer liner (74) extends between and to an inner radial side (80) and an outer radial side (82), the plurality of TPV cells (86) are disposed on the inner radial side (80), and the TPV assembly (70) further includes a heat exchanger (90) disposed at the outer radial side (82) opposite the plurality of TPV cells (86),
optionally, wherein the heat exchanger (90) includes an exterior panel (102) and a plurality of heat transfer fins (104), the exterior panel (102) extends circumferentially about the axis (44), the plurality of heat transfer fins (104) extending radially between and connecting the outer radial side (82) and the exterior panel (102), and the plurality of heat transfer fins (104) form a plurality of cooling air channels (110) through the heat exchanger (90),
further optionally, wherein the plurality of cooling air channels (110) are configured to receive bypass air flowing along the bypass flow path (68) through the exhaust section (34); and/or
wherein each of the plurality of TPV cells (86) includes a photovoltaic (PV) unit (92) and a spectral filter (94), and the spectral filter (94) is disposed between the PV unit (92) and the inner liner (72).

12. A method for generating electrical power with a thermophotovoltaic (TPV) assembly (70) of a gas turbine engine (22) of an aircraft propulsion system (20), the method comprising:
directing a combustion exhaust gas through an exhaust section (34) of the gas turbine engine (22) along a core flow path (66), the core flow path (66) extending along an axis (44) of the gas turbine engine (22);
heating an inner liner (72) of an engine case (60) with the combustion exhaust gas directed through the exhaust section (34), the inner liner (72) forming the core flow path (66) through the exhaust section (34);
generating electrical power with a plurality of TPV cells (86) of the TPV assembly (70) by absorbing an emitted light (98) from the inner liner (72) with the plurality of TPV cells (86), the plurality of TPV cells (86) disposed radially outside of the inner liner (72).

13. The method of claim 12, further comprising:
directing a bypass air flow along a bypass flow path (68) separated from the core flow path (66) by the engine case (60); and
cooling the TPV assembly (70) by directing the bypass air flow through a heat exchanger (90) of the TPV assembly (70),
optionally, wherein the engine case (60) further includes an outer liner (74) disposed radially outward of the inner liner (72), the plurality of TPV cells (86) are disposed between the inner liner (72) and the outer liner (74), and the outer liner (74) forms the bypass flow path (68).

14. The method of claim 12 or 13, wherein each of the plurality of TPV cells (86) includes a photovoltaic (PV) unit (92) and a spectral filter (94), and the method further includes filtering the emitted light (98) with the spectral filter (94) of each of the plurality of TPV cells (86) and passing a filtered light (100) from the spectral filter (94) to a photovoltaic (PV) unit (92) of each respective one of the plurality of TPV cells (86).

15. The method of any of claims 12 to 14, wherein the inner liner (72) includes an emitter coating (88) facing the plurality of TPV cells (86).
